# DEMANDE DE BREVET EUROPEEN

(11) **EP 4 191 989 A2**
(43) Date de publication de la demande: **07.06.2023**
(21) Numéro de dépôt: 22211045.4
(22) Date de dépôt: 02.12.2022
(51) Int. Cl.: H04M 3/42, H04M 3/10

(54) **PROCÉDÉ DE GESTION D'UN NUMÉRO DE TÉLÉPHONE NON ATTRIBUÉ DANS UN RÉSEAU DE COMMUNICATION, PROCÉDÉ DE TRAITEMENT D'UNE DEMANDE D ATTRIBUTION D'UN NUMÉRO DE TÉLÉPHONE, DISPOSITIFS, ÉQUIPEMENT DE COMMUNICATION, SYSTÈME ET PROGRAMMES D ORDINATEUR CORRESPONDANTS**

(30) Priorité: 03.12.2021 FR 2112932
(71) Demandeur: Orange, 92130 Issy-les-Moulineaux (FR)
(72) Inventeur: BEARDOW, Paul, 92326 CHATILLON (FR); DERVILLE, Franck, 92326 CHATILLON (FR)
(74) Mandataire: Vidon Brevets & Stratégie

(57) **Abrégé**

L'invention concerne un procédé de gestion d'au moins un numéro de téléphone non attribué dans un réseau de communications, ledit numéro de téléphone (UN1) étant précédemment attribué à un utilisateur du réseau de communications jusqu'à une date donnée, dite date de suspension, caractérisé en ce que ledit procédé est mis en œuvre par un équipement du réseau et comprend:
- l'obtention (20) d'une information relative à au moins une demande d'établissement d'appel reçue par ledit réseau de communications vers ledit numéro de téléphone pendant une période temporelle donnée, dite période d'observation, postérieure à ladite date de suspension ;
- la mise à jour (23), au moins en fonction de ladite information relative à au moins une demande d'établissement d'appel, d'au moins une information relative à un niveau d'activité (AL) dudit numéro de téléphone dans le réseau de communication, ladite information relative à un niveau d'activité étant représentative d'un nombre de demandes d'établissement d'appel vers ledit numéro de téléphone reçus par le réseau de communications pour la période d'observation donnée, et le stockage, dans une entrée d'une première table de données (DB_UN), dite table des numéros de téléphone non attribués, de ladite au moins une information relative à un niveau d'activité dudit numéro de téléphone en association avec ledit numéro de téléphone.

## Description

### Domaine technique de l'invention

Le domaine de l'invention est celui d'un réseau de communication configuré pour acheminer des appels, vers des numéros de téléphone attribués à des équipements terminaux, comme par exemple des téléphones mobiles. L'invention concerne en particulier la gestion de numéros de téléphone précédemment attribués à des utilisateurs et leur ré-attribution à d'autres utilisateurs du réseau de communication.

### Art antérieur

Un opérateur d'un réseau de communication dispose généralement d'un nombre limité de numéros de téléphones à attribués à des utilisateurs abonnés à un de ses services de téléphonie. Sur l'ensemble des numéros de téléphones réservés à cet opérateur, certains sont effectivement attribués à des utilisateurs et utilisés par ces derniers pour communiquer dans le réseau de communication, mais d'autres, non attribués, sont gardés en réserve pour de nouveaux abonnés ou pour répondre à des demandes de changement de numéros de téléphones d'utilisateurs déjà abonnés.

Quand un opérateur démarre la mise en service d'un nouveau réseau de communication, les numéros de téléphone sont tous vierges, c'est-à-dire sans aucun historique d'utilisation antérieure. Avec le temps et au gré des départs et arrivées d'abonnés, des numéros de téléphone précédemment attribués sont amenés à être recyclés. Généralement, lorsqu'un utilisateur met fin à son abonnement auprès du réseau de communications, son numéro de téléphone est désattribué, et il est placé dans un état suspendu pour une période temporelle donnée avant d'être réattribué à un nouvel utilisateur. Cette période de suspension est destinée à éviter que le nouvel abonné reçoive trop d'appels destinés à l'ancien abonné. Typiquement, l'opérateur fixe une période de suspension relativement longue, par exemple égale à six mois.

Un inconvénient est que l'opérateur se prive de ce numéro de téléphone pendant toute la période de suspension, mais sans garantie de ne pas recevoir de plaintes du nouvel abonné, une fois le numéro de téléphone réattribué. En effet, la période pendant laquelle ce numéro de téléphone reste associé à l'abonné précédent dans des listes de démarcheurs commerciaux ou frauduleux, peut être encore plus longue, car ces listes ne sont pas mises à jour régulièrement.

Il en résulte que la solution actuelle n'est pas satisfaisante pour les abonnés et qu'elle nuit à l'image de l'opérateur.

L'invention vient améliorer la situation.

### Présentation de l'invention

L'invention répond à ce besoin en proposant un procédé de gestion d'au moins un numéro de téléphone non attribué dans un réseau de communications, ledit numéro de téléphone étant précédemment attribué à un utilisateur du réseau de communications jusqu'à une date donnée, dite date de suspension. Ledit procédé est mis en œuvre par un équipement du réseau et comprend:
- l'obtention d'une information relative à au moins une demande d'établissement d'appel reçue par ledit réseau de communications vers ledit numéro de téléphone pendant une période temporelle donnée, dite période d'observation, postérieure à ladite date de suspension ;
- la mise à jour, au moins en fonction de ladite information relative à au moins une demande d'établissement d'appel, d'au moins une information relative à un niveau d'activité dudit numéro de téléphone dans le réseau de communication, ladite information relative à un niveau d'activité étant représentative d'un nombre de demandes d'établissement d'appel vers ledit numéro de téléphone reçus par le réseau de communications pour la période d'observation donnée, et le stockage, dans une entrée d'une première table de données, dite table des numéros de téléphone non attribués, de ladite au moins une information relative à un niveau d'activité dudit numéro de téléphone en association avec ledit numéro de téléphone.

L'invention repose sur une approche tout-à-fait nouvelle et inventive de la gestion des numéros de téléphone qui sont réservés à un opérateur d'un réseau de communication mais qui ne sont provisoirement plus attribués à aucun utilisateur du réseau. Elle repose sur la mise à jour, sur la base des appels émis vers ce numéro de téléphone dans le réseau de communications, d'une information relative à un niveau d'activité de ce numéro de téléphone pendant une période donnée et sur le stockage en mémoire de la valeur de ce cette information, en association avec ce numéro de téléphone.

De la sorte, la table de données des numéros de téléphone précédemment attribués et en attente d'être recyclés, est enrichie à l'aide de cette information de niveau d'activité et lorsqu'un utilisateur du réseau de communications demande à obtenir un nouveau numéro de téléphone, elle pourra être valablement exploitée pour décider si le numéro de téléphone est prêt à être réattribué ou bien s'il faut prolonger la période de suspension.

Selon un autre aspect de l'invention, l'information relative à un niveau d'activité comprend un compteur d'un nombre de tentatives d'appel vers ledit numéro de téléphone pendant la période d'observation et la mise à jour comprend l'incrémentation du compteur à l'aide de l'information relative à ladite demande d'établissement d'appel.

Avantageusement, chaque nouvelle tentative d'appel vers le numéro de téléphone non attribué est comptabilisée et stockée en mémoire pour la période d'observation considérée.

Le nombre de tentative d'appels comptabilisé constitue un indicateur d'un niveau d'activité résiduel du numéro de téléphone suspendu dans le réseau de communication pendant cette période.

On note que l'information relative à un niveau d'activité peut comprendre en outre d'autres indicateurs, comme par exemple un indicateur de fréquence des appels reçus, pour une unité de temps égale à une semaine par exemple. Une telle information peut permettre de déduire que le numéro de téléphone a été radié d'une liste utilisée par des démarcheurs.

Selon encore un autre aspect de l'invention, la demande d'établissement d'appel ayant été émise par un terminal appelant, ladite obtention comprend la réception de la demande d'établissement de l'appel par ledit équipement du réseau et l'émission d'une réponse vers le terminal appelant, ladite réponse comprenant un message d'erreur, indiquant que le numéro de téléphone appelé n'est plus attribué.

Ainsi, selon au moins un mode de réalisation, la mise à jour du compteur de demandes d'établissement d'appel est réalisée en temps réel, au cours du traitement d'une demande d'établissement d'appel. Par exemple, le procédé est mis en œuvre par un équipement proxy ou par un serveur d'application de téléphonie configuré pour traiter les appels vers des numéros non attribués et donc pour recevoir toute demande d'établissement d'appel vers un numéro non attribué.

Un avantage est que l'information relative à un niveau d'activité associée à chaque numéro non attribué est mis à jour en temps réel, lors du traitement de la demande d'établissement de l'appel, de même que la table de données des numéros de téléphone non attribués.

Selon encore un autre aspect de l'invention, ladite obtention comprend l'interrogation, à partir dudit numéro de téléphone appelé, d'une deuxième table de données, dite table d'événements, ladite deuxième table comprenant des entrées associant à un numéro de téléphone des messages d'erreurs émis en réponse à des demandes d'établissement d'un appel vers ledit numéro de téléphone. Alternativement, selon au moins un autre mode de réalisation de l'invention, l'information relative à au moins une demande d'établissement d'appel vers le numéro de téléphone non attribué est obtenue en interrogeant une table de données d'événements gérée par le réseau de communications. Cette table d'événements est ainsi stockée dans une mémoire dudit réseau de communication. La mise à jour du compteur de demandes d'établissement d'appel vers le numéro de téléphone non attribuée est donc différée par rapport au traitement de la demande d'appel proprement dite. L'interrogation de la table d'événements peut concerner une ou plusieurs demandes d'établissement d'appel reçues pendant une période donnée, par exemple un jour, une semaine etc, pour un ou plusieurs numéros de téléphone. Par exemple, la requête peut concerner toutes les demandes reçues pour tous les numéros de téléphone non attribués associés à une date de suspension antérieure à une date donnée. Elle peut être déclenchée régulièrement, par exemple tous les jours.

La mise à jour des compteurs est ensuite faite en fonction du résultat de la requête d'interrogation et peut donc concerner plusieurs numéros de téléphone non attribués et plusieurs demandes d'établissement d'appels.

Un avantage est de décorréler la gestion des numéros de téléphone non attribués et la mise à jour de la table de données de la procédure de traitement des demandes d'établissement d'appels. En effet, les communications en voix sur IP nécessitent un traitement temps réel. Il est donc préférable de ne pas complexifier le traitement des demandes d'établissement d'appels pour éviter d'introduire toute latence. Selon ce mode de réalisation de l'invention, la mise à jour du compteur selon l'invention peut être mise en œuvre par un équipement du réseau, par exemple un serveur d'applications, qui n'est pas configuré pour recevoir la demande d'établissement d'appel, mais simplement pour interroger la table de données d'événements et gérer la table de numéros de téléphone non attribués. Avantageusement, cette mise à jour est mise en œuvre par une application logicielle de type API installée sur le serveur d'application.

Selon un autre aspect de l'invention, ledit procédé comprend : - l'obtention d'une information d'appartenance de l'appelant à au moins une classe de réputation donnée, auprès d'au moins une troisième table de données, dite table de réputation ; et - la mise à jour de la table de données de numéros de téléphone non attribués est en outre fonction de l'appartenance de l'appelant à la au moins une classe de réputation donnée.

Par exemple, la au moins une classe de réputation donnée comprend la classe des démarcheurs commerciaux et/ou la classe des démarcheurs frauduleux.

Selon au moins un mode de réalisation de l'invention, seules les tentatives d'appel en provenance de ces démarcheurs sont donc comptabilisées. Selon un autre mode de réalisation, toutes les tentatives d'appel sont comptabilisées, que l'appelant soit un démarcheur ou un appelant légitime. En effet, ceci indique que l'utilisateur précédent du numéro de téléphone n'a pas informé ses contacts qu'il avait changé de numéro de téléphone. Selon un autre mode de réalisation, l'information relative à un niveau d'activité d'un numéro de téléphone non attribué comprend une première information de comptage de toutes les demandes d'établissement d'appel émise vers ce numéro de téléphone et une deuxième information de comptage spécifique aux demandes d'établissement d'appels émanant d'appelants appartenant à la classe des démarcheurs commerciaux ou à la classe des démarcheurs frauduleux. Avantageusement, des seuils de décision spécifiques peuvent être appliqués à la première information et à la deuxième information de comptage.

En effet, les appels en provenance de cette classe d'appelants est ressentie comme très gênante pour les utilisateurs d'un numéro de téléphone recyclé. Il est donc particulièrement important de prendre en compte le nombre d'appels reçus de cette classe d'appelants sur une période temporelle donnée pour évaluer un risque que le nouvel utilisateur de ce numéro de téléphone recyclé reçoive des appels de démarchage destinés au précédent utilisateur de ce numéro. Ce nombre d'appels reçus représente un niveau d'activité résiduelle du numéro de téléphone non attribué qui est mis à disposition du réseau pour lui permettre de décider si ce numéro de téléphone est prêt ou non à être réattribué.

Selon encore un autre aspect de l'invention, l'information relative à un niveau d'activité du numéro de téléphone comprend en outre un indicateur d'activité, ledit procédé comprend la vérification d'une valeur du niveau d'activité dudit numéro de téléphone pendant la période d'observation donnée, par comparaison de la valeur dudit au moins un compteur à un seuil d'acceptabilité donné et la mise à jour dudit indicateur d'activité, ledit indicateur étant positionné à une valeur « inactif » lorsque la valeur dudit compteur est inférieure au seuil d'acceptabilité donné et à une valeur « actif » sinon. Avantageusement, la table de données est enrichie d'un indicateur d'activité qui traduit la mise en œuvre d'une politique de réattribution des numéros de téléphone non attribués à de nouveaux utilisateurs. Cette information pourra ensuite être directement exploitée par un équipement du réseau en charge de la gestion de la clientèle et de la réattribution de numéros de téléphone à de nouveaux utilisateurs, en choisissant un numéro de téléphone non attribué dont l'indicateur d'activité a la valeur « inactif ».

L'invention concerne également un dispositif de gestion d'au moins un numéro de téléphone non attribué dans un réseau de communications, ledit numéro de téléphone étant précédemment attribué à un utilisateur du réseau de communications jusqu'à une date donnée, dite date de suspension. Ledit dispositif est configuré pour mettre en œuvre au niveau d'un équipement du réseau:
- l'obtention d'une information relative à au moins une demande d'établissement d'appel reçue par ledit réseau de communications vers ledit numéro de téléphone pendant une période temporelle donnée, dite période d'observation, postérieure à ladite date de suspension ;
- la mise à jour, au moins en fonction de ladite information relative à au moins une demande d'établissement d'appel, d'au moins une information relative à un niveau d'activité dudit numéro de téléphone dans le réseau de communication, ladite information relative à un niveau d'activité étant représentative d'un nombre de demandes d'établissement d'appel vers ledit numéro de téléphone reçus par le réseau de communications pour la période d'observation donnée, et le stockage, dans une entrée d'une première table de données, dite table des numéros de téléphone non attribués, de ladite au moins une information relative à un niveau d'activité dudit numéro de téléphone en association avec ledit numéro de téléphone.

Avantageusement, ledit dispositif configuré pour mettre en œuvre les étapes du procédé de gestion tel que décrit précédemment.

Avantageusement, ledit dispositif est intégré dans un équipement de communications du réseau de communications, tel qu'un serveur d'applications de téléphonie ou un équipement proxy . Avantageusement, ledit équipement de communications est compris dans un système de gestion d'au moins un numéro de téléphone non attribué dans un réseau de télécommunications.

Le système, l'équipement de communication et le dispositif de gestion présentent au moins les mêmes avantages que ceux conférés par le procédé de gestion précité.

Corrélativement l'invention concerne aussi un procédé de traitement d'une demande d'attribution d'un numéro de téléphone à un utilisateur d'un réseau de communications, ledit procédé comprenant, sur réception de ladite demande d'attribution, la sélection dudit numéro de téléphone parmi une pluralité de numéros de téléphone non attribués et l'envoi d'une réponse comprenant le numéro de téléphone sélectionné.

Ladite sélection comprend :
- l'obtention d'un numéro de téléphone et d'au moins une information relative à un niveau d'activité du numéro de téléphone dans ledit réseau de communications, auprès d'une première table de données, dite table des numéros de téléphone non attribués, ladite table comprenant des entrées, une dite entrée associant un numéro de téléphone précédemment attribué à des utilisateurs jusqu'à une date donnée, dite date de suspension, ladite information relative à un niveau d'activité du numéro de téléphone pendant une période temporelle donnée, dite période d'observation, postérieure à ladite date de suspension;
- la décision de sélectionner ledit numéro de téléphone audit utilisateur en fonction de ladite information relative à un niveau d'activité et d'au moins un critère de sélection, et
- la répétition des étapes précédentes pour un autre numéro de téléphone , tant qu'il a été décidé de ne pas sélectionner ledit numéro de téléphone.

L'invention repose sur une approche tout-à-fait nouvelle et inventive de la réattribution d'un numéro de téléphone précédemment attribué, qui s'appuie sur une table de données enrichie, comprenant non seulement les numéros de téléphone non attribués mais, pour chacun d'eux, au moins une information relative à un niveau d'activité du numéro de téléphone dans le réseau pendant une période temporelle donnée. Cette information est ensuite exploitée pour décider, en application d'une politique de réattribution de l'opérateur, si le numéro de téléphone est prêt à être réattribué à l'utilisateur qui en a fait la demande ou s'il faut prolonger sa période de suspension parce que son niveau d'activité résiduelle reste trop élevé.

Selon un autre aspect de l'invention, l'information relative à un niveau d'activité dudit numéro de téléphone dans le réseau de communications comprend au moins une information relative à un compteur d'un nombre de demandes d'établissement d'appel vers ledit numéro reçues par ledit réseau de communications pendant la période d'observation donnée, et le procédé comprend la vérification dudit au moins un critère de sélection, ladite vérification comprenant la comparaison de ladite information à un seuil de décision donné, la décision de sélectionner ledit numéro de téléphone étant prise lorsque la valeur de compteur est inférieure ou égale à un seuil d'acceptabilité donné. Avantageusement, l'information relative à un niveau d'activité du numéro de téléphone non attribué comprend une valeur de compteur d'un nombre de demandes d'établissement d'appel vers ledit numéro qui ont été reçues par ledit réseau de télécommunications pendant une période temporelle donnée, dite période d'observation.

Selon ce mode de réalisation, la décision de réattribuer ou non le numéro de téléphone est prise en fonction du dépassement ou non d'un seuil d'acceptabilité donné, qui correspond à un nombre de tentatives d'appel vers ce numéro de téléphone maximal autorisé pendant la période d'observation donnée. Par exemple, le seuil est fixé à 30 tentatives d'appel sur une période de 30 jours, soit en moyenne un appel par jour. Le numéro de téléphone est sélectionné lorsqu'il reçoit jusqu'à 30 appels en 30 jours.

Selon ce mode de réalisation, la politique de réattribution d'un numéro est appliquée à la demande, lors du traitement d'une demande d'attribution spécifique à un utilisateur.

Selon encore un autre aspect, l'information relative à un niveau d'activité dudit numéro de téléphone comprend un indicateur d'activité destiné à prendre une valeur parmi les valeurs « actif » et « inactif » et ledit au moins un critère de sélection comprend que l'indicateur d'activité a la valeur « inactif ». Un avantage d'un tel indicateur, qui prend des valeurs binaires, est qu'il reflète une décision déjà prise par le réseau de communications et préalablement stockée dans la table de données. De la sorte, la politique de l'opérateur en matière de réattribution de numéros de téléphone est appliquée en un seul lieu, par exemple au niveau de l'équipement du réseau qui gère la table de numéros de téléphones non attribués.

Selon encore un autre aspect de l'invention, l'obtention comprend l'émission d'une requête d'obtention d'un numéro de téléphone non attribué à ladite table de données, ladite requête comprenant ledit critère de sélection.

Un avantage est que le numéro de téléphone obtenu en réponse à l'interrogation de la table de données correspond à un indicateur d'activité positionné à la valeur « inactif » et peut donc directement être réattribué à l'utilisateur qui en a fait la demande.

L'invention concerne également un dispositif de traitement d'une demande d'attribution d'un numéro de téléphone à un utilisateur d'un réseau de télécommunications, ledit dispositif étant configuré pour mettre en œuvre la réception de ladite demande d'attribution, la sélection dudit numéro de téléphone parmi une pluralité de numéros de téléphone non attribués et l'envoi d'une réponse comprenant le numéro de téléphone sélectionné.

Selon l'invention, ladite sélection comprend :
- l'obtention d'un numéro de téléphone non attribué et d'au moins une information relative à un niveau d'activité du numéro de téléphone dans ledit réseau de communications, auprès d'une première table de données, dite table des numéros de téléphone non attribués, ladite table comprenant des entrées, une dite entrée associant un numéro de téléphone précédemment attribué à des utilisateurs jusqu'à une date donnée, dite date de suspension, une information relative à un niveau d'activité du numéro de téléphone pendant une période d'observation donnée, postérieure à ladite date de suspension;
- la décision de sélectionner ledit numéro de téléphone audit utilisateur en fonction de ladite information et d'au moins un critère de sélection, et
- la répétition de l'obtention et de la sélection d'un autre numéro de téléphone, tant qu'il a été décidé de ne pas sélectionner ledit numéro de téléphone.

Avantageusement, ledit dispositif de traitement est intégré dans un équipement de communications du réseau de communications, tel qu'une plateforme de gestion de clientèle ou un serveur d'applications de téléphonie.

Avantageusement, ledit équipement de communications est compris dans le système de gestion précité.

Le système, l'équipement de communication et le dispositif de traitement présentent au moins les mêmes avantages que ceux conférés par le procédé de traitement précité.

L'invention concerne également des produits programmes d'ordinateur comprenant des instructions de code de programme pour la mise en œuvre respective des procédés de gestion et de traitement tels que décrit précédemment, lorsqu'il est exécuté par un processeur.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également au moins un support d'enregistrement lisible par un ordinateur sur lequel est enregistré un programme d'ordinateur comprenant des instructions de code de programme pour l'exécution des étapes des procédés selon l'invention tel que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet.

Alternativement, le ou les supports d'enregistrement peuvent être un ou des circuits intégrés dans lesquels chaque programme est incorporé, le ou les circuits étant adaptés pour exécuter ou pour être utilisé dans l'exécution du ou des procédés précités.

Selon un exemple de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en œuvre ses propres modules logiciels.

Les différents modes de réalisation mentionnés ci-dessus sont combinables entre eux pour la mise en œuvre de la présente technique.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1****]** : présente un exemple d'architecture d'un système de gestion d'un numéro de téléphone non attribué à un utilisateur dans un réseau de communications, selon l'invention ;
**[****Fig 2****]** : décrit sous forme d'un logigramme les étapes d'un procédé de gestion d'au moins un numéro de téléphone non attribué dans un réseau de communications, selon un exemple de réalisation de l'invention ;
**[****Fig 3A****]** : détaille l'obtention d'une information relative à au moins une demande d'établissement d'un appel vers un numéro de téléphone non attribué dans le réseau de communications, selon un premier exemple de réalisation de l'invention ;
**[****Fig 3B****]** : détaille l'obtention d'une information relative à au moins une demande d'établissement d'un appel vers un numéro de téléphone non attribué dans le réseau de communication, selon un deuxième exemple de réalisation de l'invention ;
**[****Fig 4****]** : décrit sous forme d'un diagramme de flux les échanges entre un terminal utilisateur appelant un numéro de téléphone non attribué dans un réseau de communications et des équipements de communication dudit réseau, selon un exemple de réalisation de l'invention ;
**[****Fig 5****]** : décrit sous forme d'un logigramme les étapes d'un procédé de traitement d'une demande d'attribution d'un numéro de téléphone à un utilisateur, selon un exemple de réalisation de l'invention ;
**[****Fig 6****]** : décrit sous forme d'un diagramme de flux les échanges entre un agent de service demandant l'attribution d'un numéro de téléphone à un nouvel utilisateur d'un réseau de communications et des équipements de communication dudit réseau, selon un exemple de réalisation de l'invention ;
**[****Fig 7****]** : décrit un exemple de structure matérielle d'un dispositif de gestion d'au moins un numéro de téléphone non attribué dans un réseau de communications selon l'invention ; et
**[****Fig 8****]** : décrit un exemple de structure matérielle d'un dispositif de traitement d'une demande d'attribution d'un numéro de téléphone à un utilisateur du réseau de communications selon l'invention.

### Description détaillée de l'invention

L'invention concerne d'une part la gestion d'au moins un numéro de téléphone non attribué dans un réseau de communications, ledit numéro de téléphone ayant été précédemment attribué à un utilisateur jusqu'à une date de suspension donnée et d'autre part le traitement d'une demande d'attribution d'un tel numéro de téléphone à un nouvel utilisateur de ce réseau de communications.

Le principe général de l'invention repose sur l'enrichissement, au niveau du réseau de communication, d'une table de données de numéros de téléphones non attribués par l'opérateur de ce réseau, en associant à un numéro de téléphone précédemment attribué une information relative à un niveau d'activité de ce numéro de téléphone dans le réseau de communications. Cette information supplémentaire est exploitée pour décider si ce numéro de téléphone est prêt à être réattribué à un nouvel utilisateur ou bien si sa période de suspension doit être prolongée.

Cette information comprend notamment un nombre de tentatives d'appel vers ce numéro de téléphone comptabilisées pendant une période d'observation donnée et l'invention propose notamment de décider d'attribuer le numéro de téléphone si le nombre de demandes d'établissement d'appel vers ce numéro de téléphone pendant la période d'observation est inférieur à un seuil donné. Un avantage est de garantir un niveau de nuisance acceptable pour le nouvel utilisateur tout en optimisant la période de suspension pendant laquelle un numéro de téléphone précédemment attribué à un utilisateur ne peut pas être réattribué à un nouvel utilisateur.

L'invention s'applique au traitement d'appels téléphoniques en voix sur IP par un réseau de communication fixe ou mobile, par exemple selon une technologie VoLTE (pour « Voice over Long Term Evolution », en anglais), ViLTE (pour « Video over Long Term Evolution », en anglais) ou VoIP (pour « Voice over Internet Protocol », en anglais). Ces différentes technologies s'appuient généralement sur un protocole de signalisation, par exemple de type SIP (pour « Signalling Internet Protocol », en anglais) pour établir et gérer une session de communication téléphonique.

Bien sûr, l'invention n'est pas limitée à ce protocole et s'applique à tout autre protocole permettant la signalisation d'appel en voix sur IP. Néanmoins, dans la suite de la description, les exemples présentés mettront en œuvre ce protocole de signalisation.

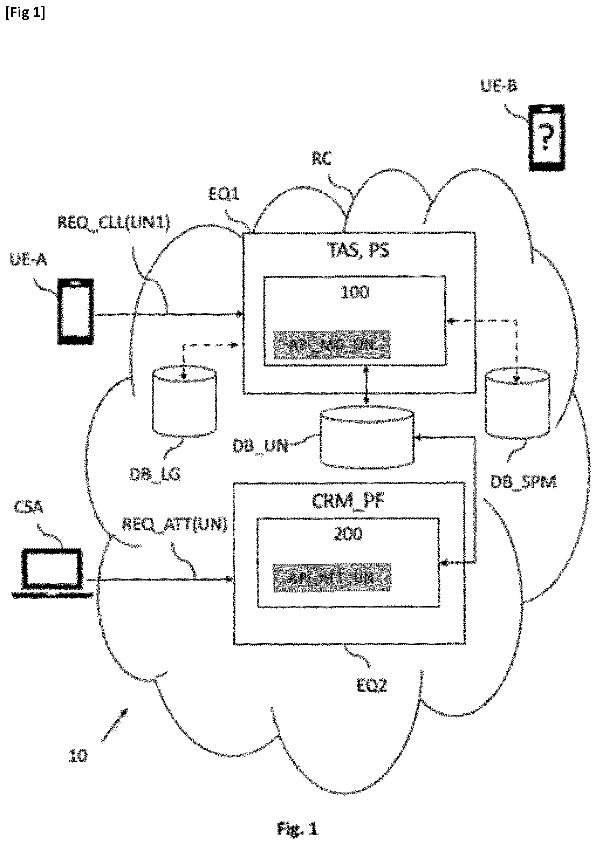

On présente désormais, en relation avec la **figure 1**, un exemple d'architecture d'un système 10 de gestion d'au moins un numéro de téléphone non attribué dans un réseau de communication RC selon un exemple de réalisation de l'invention. Dans cet exemple, on a représenté schématiquement, comme une seule entité, le réseau de communications RC d'un opérateur, sans faire apparaître, par souci de simplicité, ses différents réseaux d'accès. On suppose que ce réseau de communications RC met en œuvre au moins une des technologies de voix sur IP précédemment évoquées. Dans cet exemple, un premier équipement terminal UE-A se connecte à un réseau de communications, par exemple le réseau de communications RC, via un réseau d'accès fixe (non représenté) de type ADSL ou fibre ou un réseau d'accès sans fil, selon une technologie de type Wi-Fi. Bien sûr l'invention n'est pas limitée à cet exemple et s'applique tout aussi bien à un réseau d'accès mobile de type cellulaire, auquel se connecte le premier équipement terminal UE-A par une liaison de type 2G à 5G. On suppose que le premier équipement terminal UE-A émet une demande d'établissement d'appel vers un numéro de téléphone précédemment attribué à un deuxième équipement terminal UE-B par l'opérateur du réseau de communications RC.

On note que l'utilisateur du premier équipement terminal UE-A n'est pas forcément un abonné de l'opérateur du réseau de communications RC. Il peut aussi avoir souscrit un abonnement auprès d'un autre opérateur d'un autre réseau de communications (non représenté). Dans ce cas, sa demande est transmise par le réseau de communications de cet autre opérateur au réseau de communications RC, de façon connue en soi.

Comme illustré par la figure 1, le système 10 selon l'invention comprend un premier équipement de communication EQ1 du réseau de communication RC. On suppose que cet équipement de communication EQ1 est placé sur le chemin du message de demande d'établissement d'appel émis par le premier équipement terminal ou terminal appelant UE-A ou bien que d'autres équipements du réseau qui reçoivent ce message sont configurés pour le rediriger vers lui. Il s'agit par exemple d'un équipement proxy PS, d'un serveur d'applications téléphoniques TAS (pour « Telephone Application Server », en anglais) ou bien de tout autre équipement de communication du réseau RC, tel qu'un routeur de session. Il est en effet configuré pour examiner le trafic de signalisation entrant et déterminer où acheminer le trafic et peut aussi être utilisé pour enregistrer les appels dans une table ou journal d'appels.

Selon l'invention, un tel équipement EQ1 est configuré pour gérer au moins une première table de données DB_UN, dite table des numéros de téléphones non attribués, stockée dans une mémoire du réseau de communication RC.

Dans l'exemple particulier de réalisation de la figure 1, le premier équipement EQ1 comprend un dispositif 100 de gestion d'un numéro de téléphone non attribué dans le réseau de communications RC selon un mode de réalisation de l'invention. On suppose que ce numéro de téléphone a précédemment été attribué à un utilisateur du réseau RC et qu'il n'est maintenant plus attribué depuis une date de suspension donnée.

Selon l'invention, le dispositif 100 est configuré pour obtenir une information relative à au moins une demande d'établissement d'appel reçue par ledit réseau de communications vers ledit numéro de téléphone pendant une période temporelle donnée, dite période d'observation, postérieure à la date de suspension. Le dispositif 100 est en outre configuré pour mettre à jour une information relative à un niveau d'activité du numéro de téléphone à partir de l'information relative à la demande d'établissement d'appel. Avantageusement, cette information relative à un niveau d'activité comprend au moins un compteur d'un nombre de demandes d'établissement d'appel vers ledit numéro de téléphone pour la période d'observation donnée en fonction de ladite information obtenue et la mise à jour comprend l'incrémentation de ce compteur. Le dispositif est enfin configuré pour stocker, dans la première table de données DB_UN, l'information de niveau d'activité mise à jour pour la période d'observation donnée, en association avec ledit numéro de téléphone.

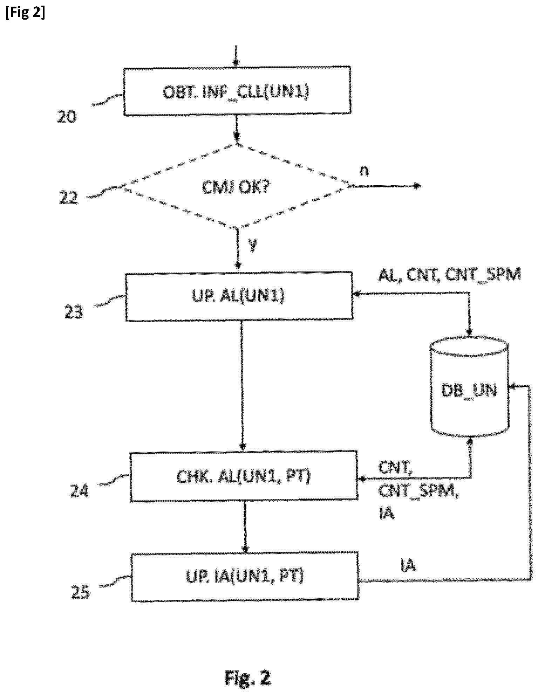

Le dispositif 100 met ainsi en œuvre le procédé de gestion d'au moins un numéro de téléphone non attribué selon l'invention qui sera détaillé ci-après en relation avec la figure 2. Selon un mode de réalisation, il est implémenté sous la forme d'une application logicielle API_MG_UN de type API (pour « Application Programming Interface », en anglais), installée sur le premier équipement EQ1. Avantageusement, cette application est dédiée à la mise en œuvre d'un service de gestion des numéros de téléphone non attribués selon l'invention.

En effet, dans un réseau d'opérateur comme le réseau RC, il est courant qu'un serveur d'application héberge plusieurs applications logicielles mettant chacune en œuvre un service spécifique et en particulier le service de gestion des numéros de téléphones non attribués.

Bien sûr, l'invention n'est pas limitée à cet exemple et s'applique aussi lorsque le premier équipement EQ1 est un autre équipement du réseau, tel que par exemple un équipement proxy PS, qui s'est préalablement enregistré auprès du serveur d'application TAS afin qu'il lui retransmette certains messages de signalisation d'appels.

Alternativement, le dispositif 100 peut être indépendant du premier équipement EQ1, mais connecté à celui-ci par une liaison quelconque, filaire ou non.

La figure 1 présente aussi un exemple d'architecture d'un deuxième équipement du réseau EQ2, selon un mode de réalisation de l'invention. Il s'agit par exemple d'un équipement en charge de la gestion de clientèle CRM (de l'anglais, « Customer Relationship Management »), tel qu'une plateforme de gestion de clientèle CRM_PF. Selon cet exemple, le deuxième équipement réseau EQ2 comprend un dispositif 200 de traitement d'une demande d'attribution d'un numéro de téléphone à un utilisateur du réseau de communication RC. Par exemple, cette demande est reçue d'un agent de clientèle CSA (de l'anglais, « Customer Service Agent »), par exemple installé sur un terminal utilisateur, de type ordinateur portable ou téléphone intelligent, connecté au réseau de communication RC et manipulé par un employé de l'opérateur. Selon l'invention, le dispositif 200 est configuré pour recevoir ladite demande d'attribution, sélectionner un numéro de téléphone parmi une pluralité de numéros de téléphone non attribués et envoyer une réponse à la demande d'attribution comprenant le numéro de téléphone sélectionné, ladite sélection comprenant :
- l'obtention d'un numéro de téléphone et d'une information associée audit numéro, ladite information étant relative à un niveau d'activité du numéro de téléphone non attribué pendant une période temporelle donnée, dite période d'observation, auprès de la première table de données DB_UN;
- la décision de sélectionner ou non ledit numéro de téléphone audit utilisateur en fonction de ladite information relative à un niveau d'activité pendant une période temporelle donnée, dite période d'observation, postérieure à ladite date de suspension et d'au moins un critère de sélection, et
- la répétition de l'obtention et de la décision pour un autre numéro de téléphone, lorsqu'il a été décidé de ne pas sélectionner ledit numéro de téléphone.

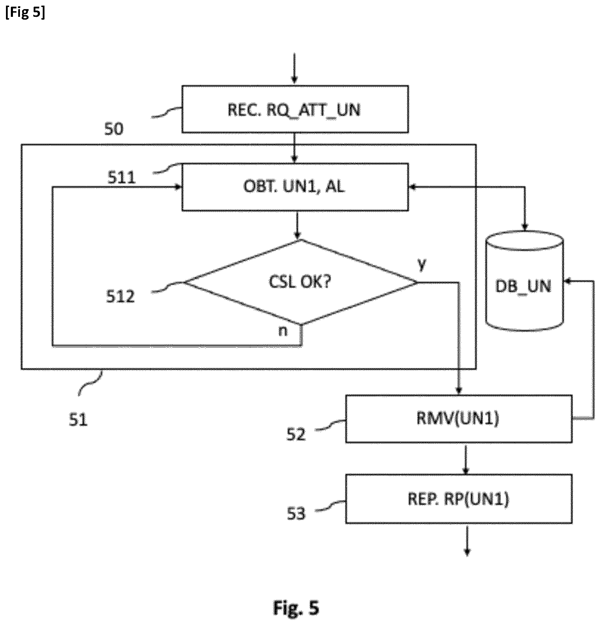

Ainsi, le dispositif 200 est configuré pour interroger la première table de données DB_UN en vue de sélectionner un numéro de téléphone non attribué et de répondre à la demande d'attribution qu'il a reçue. Le dispositif 200 met donc en œuvre le procédé de traitement d'une demande d'attribution d'un numéro de téléphone à un utilisateur du réseau de communication selon l'invention qui sera détaillé ci-après en relation avec la figure 5.

Selon un mode de réalisation, il est implémenté sous la forme d'une application logicielle API_ATT_UN de type API, installée sur le deuxième équipement EQ2. Avantageusement, cette application est dédiée à l'attribution d'un numéro de téléphone à un utilisateur à l'aide de la première table de données DB_UN de numéros de téléphones non attribués, enrichie selon l'invention et stockée dans une mémoire du réseau RC.

Alternativement, le dispositif 200 peut être indépendant du deuxième équipement EQ2, mais connecté à celui-ci par une liaison quelconque, filaire ou non.

Selon un autre mode de réalisation, les deux dispositifs 100 et 200 sont hébergés par un seul et même équipement du réseau, par exemple le serveur d'application TAS, qui dans ce cas gère l'ensemble du processus selon l'invention.

On présente désormais, en relation avec la figure 2, sous une forme de logigramme, un exemple de mise en œuvre d'un procédé de gestion d'au moins un numéro de téléphone non attribué dans le réseau de communication RC selon un mode de réalisation de l'invention.

Dans la suite, on suppose qu'il est mis en œuvre par un équipement proxy PS ou par un serveur d'application TAS, l'un comme l'autre étant configuré pour recevoir les messages de demandes d'établissement d'appel émis par les terminaux appelants vers un numéro de téléphone non attribué. Comme précédemment évoqué, le procédé en question est par exemple implémenté sous la forme d'une application logicielle API_MG_UN.

On suppose que parmi cette pluralité de numéros de téléphones non attribués, certains peuvent être encore vierges de tout historique d'utilisation, mais que plusieurs numéros de téléphone ont déjà été précédemment attribués à au moins un utilisateur jusqu'à une date donnée, antérieure à la date courante, dite date de suspension. On note que parmi ces numéros de téléphone, certains ont pu être précédemment utilisés pour d'autres services rendus par l'opérateur du réseau de communication RC. Par exemple, ils peuvent avoir été attribués à des objets connectés de l'Internet des objets ou IoT (de l'anglais, « Internet of Things ») qui ont besoin d'être équipés d'une carte SIM (de l'anglais, « subscriber identification module »). L'invention concerne plus spécifiquement les numéros de téléphone précédemment attribués à des utilisateurs d'équipements terminaux, dit « suspendus ». On suppose que le réseau de communication RC gère une première table de données de numéros de téléphone non attribués, par exemple la table DB_UN précédemment décrite en relation avec la figure 1, comprenant une pluralité d'entrées associées à des numéros de téléphones non attribués dans le réseau et que l'équipement EQ1, TAS, PS est configuré pour accéder à cette table de données et gérer les données qu'elle contient.

En 20, une information relative à au moins une demande d'établissement d'appel reçue par ledit réseau de communications vers un numéro de téléphone non attribué UN1 pendant une période temporelle donnée, dite période d'observation, est reçue par l'équipement EQ1, TAS, PS. La période d'observation considérée est postérieure à ladite date de suspension.

Cette information peut prendre différentes formes, dont deux exemples seront détaillés ci-après. Néanmoins, dans tous les cas, elle indique qu'une ou plusieurs tentatives de joindre le numéro de téléphone non attribué ont été faites par un ou plusieurs terminaux utilisateurs appelants, tels que par exemple le premier équipement terminal UE-A de la figure 1. On suppose que l'utilisateur de ce terminal UE-A cherche à joindre un utilisateur du deuxième équipement terminal UE-B et qu'il ne sait pas que le numéro de téléphone UN1 qu'il a composé n'est plus attribué à l'utilisateur du deuxième équipement terminal UE-B.

En 22, un ou plusieurs critères de mise à jour sont pris en considération. Un premier exemple de critère de mise à jour est temporel et relatif à la date de suspension du numéro de téléphone. Par exemple, ce critère peut être de ne prendre en compte les informations obtenues en 20 que pour les numéros de téléphones suspendus depuis une période de suspension minimale. Par exemple, cette période de suspension minimale est choisie égale à six mois.

Un deuxième exemple de critère de mise à jour peut être lié au type d'appelant et limiter la prise en compte des informations obtenues en 20 aux tentatives d'appel émanant d'appelants de type démarcheurs commerciaux ou frauduleux, parce que ce type d'appel est ressenti comme particulièrement gênant par les utilisateurs.

Un troisième exemple de critère de mise à jour peut être lié à la période d'observation considérée et consister à vérifier qu'elle n'est pas expirée. Dans ce cas, si une nouvelle période d'observation a démarré, il convient de mettre à jour l'information de niveau d'activité du numéro de téléphone pour cette nouvelle période. Par exemple, la période d'observation est égale à 30 jours.

Si au moins un critère de mise à jour n'est pas satisfait, le procédé se termine et aucune mise à jour de la table de données n'est mise en œuvre pour le numéro de téléphone UN1.

Au contraire, si le ou les critères de mise à jour sont satisfaits, une mise à jour 23 de l'information de niveau d'activité AL est déclenchée. Selon l'invention, ce niveau d'activité comprend une information relative à un compteur CNT(UN1) d'un nombre de demandes d'établissement d'appel vers le numéro de téléphone UN1 reçues pendant la période d'observation donnée. Dans le cas où la période d'observation n'a pas expiré depuis la mise à jour précédente, la mise à jour comprend l'incrémentation de ce compteur avec le nombre de demandes reçues. Si la période d'observation a expiré et une nouvelle a commencé, le compteur est réinitialisé avant d'être incrémenté.

La valeur mise à jour de l'information de niveau d'activité AL, comprenant en particulier celle du compteur CNT est ensuite stockée en mémoire, dans la table de données DB_UN, par exemple en association avec un identifiant de la période d'observation courante et le numéro de téléphone UN1. Avantageusement, la valeur précédente du compteur est conservée en association avec un identifiant de la période d'observation précédente, ce qui permet d'obtenir un historique des tentatives d'appel vers le numéro de téléphone UN1 dans le temps.

Optionnellement, en 24, l'information AL de niveau d'activité associée au numéro de téléphone UN1 est obtenue de la table de données DB_UN pour vérification. Dans cet exemple, on suppose qu'elle comprend au moins un compteur CNT, CNT_SPM d'un nombre de tentatives d'appel vers le numéro de téléphone UN1 pendant une période d'observation donnée et un indicateur d'activité IA. Cet indicateur IA prend une valeur parmi deux valeurs prédéterminées, une première correspondant à un état « inactif » et une deuxième à un état « actif ». Avantageusement, cette vérification consiste à vérifier que l'indicateur IA est positionné à une valeur correcte et elle comprend la comparaison de la ou des valeurs de compteur obtenues à des seuils d'acceptabilité TH, TH_SPM donnés. Si la ou les valeurs sont inférieures ou égales aux seuils respectifs, alors il est décidé de positionner l'indicateur d'activité IA à la valeur « inactif ». Si l'indicateur d'activité IA stocké en mémoire pour la période d'observation courante n'est pas positionné à cette valeur, une requête de mise à jour est envoyée à la table de données DB_UN en 25.

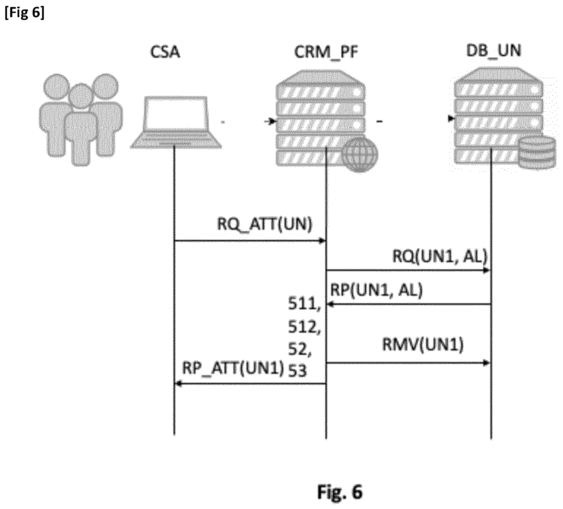

On comprend que ce mode de réalisation de l'invention permet de stocker dans la table une valeur d'état du numéro de téléphone non attribué UN1, qui est directement exploitable par un autre équipement du réseau RC, par exemple configuré pour attribuer un numéro de téléphone de la table DB_UN à un nouvel utilisateur du réseau RC. Cet aspect sera détaillé ci-après, en relation avec les figures 5 et 6.

On note que les exemples exposés ci-dessus sont présentés à titre illustratif, sans perte de généralité, d'autres modes de réalisation pouvant être envisagés.

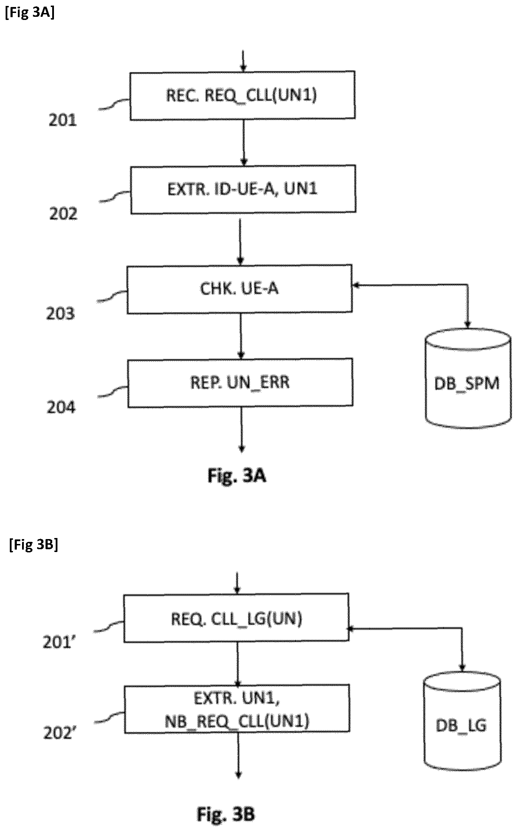

On détaille maintenant, en relation avec la figure 3A, l'obtention 20 de l'information relative à au moins une demande d'établissement d'appel vers un numéro de téléphone non attribué selon un premier mode de réalisation du procédé de gestion selon l'invention.

En 201, un message de signalisation comprenant une demande d'établissement d'appel REQ_CLL(UN1) vers le numéro de téléphone UN1 est reçue par l'équipement EQ1, PS, TAS.

En 202, un identifiant de l'appelant, par exemple son numéro de téléphone ou MSISDN (pour « Mobile Station International Subscriber Directory Number », en anglais) et le numéro de téléphone de l'appelé UN1 sont extraits du message reçu. L'identifiant MSISDN de l'appelé est en effet utilisé pour router un appel vers cet appelé.

Optionnellement, en 203, une vérification de l'appelant UE-A est effectuée à partir de son numéro de téléphone en interrogeant au moins une table de données stockée dans une mémoire du réseau RC, par exemple la table de données DB_SPM de la figure 1 comprenant des informations relatives à des appelants considérés comme des démarcheurs commerciaux ou frauduleux. Une réponse est reçue comprenant un type d'appelant associé au numéro de téléphone de l'appelant, si un enregistrement a été trouvé dans la table DB_SPM et un message d'erreur sinon. Avantageusement, le type d'appelant reçu est stocké en mémoire en association avec le numéro de téléphone UN1 et un identifiant de la requête d'établissement d'appel reçue.

En 204, une réponse comprenant un message d'erreur UN_ERR est transmise au terminal de l'appelant UE-A, pour lui indiquer que le numéro de téléphone UN1 n'est plus attribué et que l'appel est rejeté.

On détaille maintenant, en relation avec la figure 3B, l'obtention 20 de l'information relative à au moins une demande d'établissement d'appel vers un numéro de téléphone non attribué selon un deuxième mode de réalisation du procédé de gestion selon l'invention.

Dans cet exemple, l'information relative à au moins une demande d'établissement d'appel vers un numéro de téléphone non attribué est obtenue en interrogeant en 201' une table de données DB_LG ou table d'événements (ou « logs », en anglais) stockée dans une mémoire du réseau RC, comme illustré par la figure 1. Par exemple, une requête d'interrogation REQ_CLL(UN1) est transmise à la table DB_LG, comprenant une période temporelle considérée, par exemple égale à la période d'observation ou à une fraction de la période d'observation et un type d'événement recherché. Il s'agit par exemple de rechercher les événements de type rejet d'une demande d'établissement d'appel pour cause de numéro de téléphone demandé non attribué.

Une réponse est reçue de la table de données DB_LG, comprenant 0, 1 ou plusieurs rapports d'événements relatifs à 0, 1 ou plusieurs numéros de téléphone non attribués, correspondant aux critères d'interrogation.

En 202', les numéros de téléphone attribués concernés par les rapports d'événements reçus sont extraits de la réponse reçue ainsi que des informations relatives à chacune des requêtes d'établissement d'appel associées. Un nombre de requêtes d'établissement d'appel vers chacun des numéros de téléphones non attribués est déduit des informations extraites, pour la période d'interrogation considérée.

Avantageusement, un numéro de téléphone de l'appelant est aussi extrait des rapports d'événements reçus et il est exploité pour interroger la table de données DB_SPM.

Ensuite, les étapes 22 et 23 du procédé de gestion selon l'invention qui ont été précédemment décrites sont mises en œuvre pour chacun des numéros de téléphone non attribués obtenus.

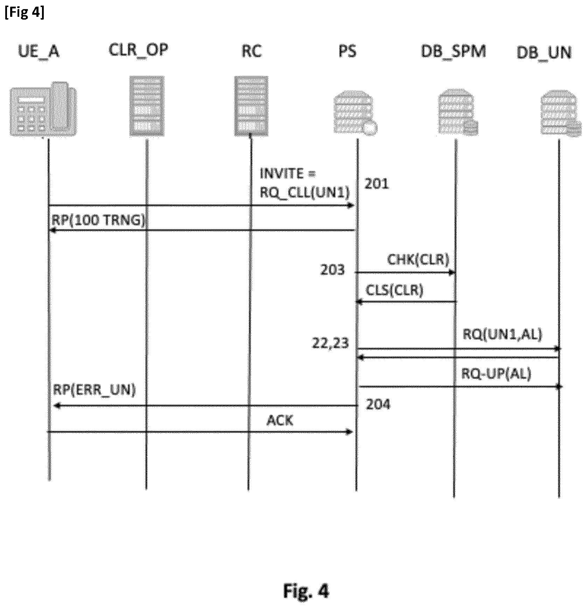

On détaille maintenant, en relation avec la figure 4, un diagramme de flux des messages échangés entre différents équipements du réseau de communications RC suite à la réception d'une demande d'établissement d'un appel vers un numéro de téléphone non attribué. Dans cet exemple, on suppose que les messages de signalisation échangés sont conformes au protocole SIP.

On considère l'équipement terminal ou terminal appelant UE-A de la figure 1 et on suppose qu'il émet une demande d'établissement d'appel REQ_CLL(UN1) vers le numéro de téléphone UN1, qu'il pense être attribué au deuxième équipement terminal ou terminal appelé UE-B, dans un message de type SIP INVITE.

Le message SIP INVITE est reçu par le réseau de communication CLR_OP du terminal appelant UE-A qui le retransmet au réseau de communication RC de l'opérateur qui gère le numéro UN1 précédemment attribué au terminal appelé UE-B, où l'invention est mise en œuvre.

A la réception du message INVITE par le réseau RC de l'appelé, le réseau de l'appelé vérifie auprès du serveur HSS (de l'anglais, « Home Subscriber Server ») que le numéro de téléphone appelé est attribué à un utilisateur abonné et obtient les informations nécessaires pour acheminer l'appel jusqu'à cet abonné. Pour les réseaux de communications mobiles dont l'architecture est conforme à la norme UMTS ou LTE, le serveur HSS est la concaténation du registre HLR (de l'anglais, « Home Location Registry ») des réseaux GSM et Edge et des services d'authentification. Il s'agit d'une base de données qui comprend des numéros de téléphone attribués à l'opérateur et pour chacun d'eux, au moins un identifiant de l'abonné auquel il a été attribué.

Si le numéro de téléphone de l'appelé est un numéro attribué, le réseau RC achemine l'appel jusqu'à lui et l'appel se termine normalement.

Si, au contraire, le numéro de téléphone de l'appelé est un numéro non attribué, l'appel est transféré vers un serveur proxy PS configuré pour effectuer les opérations suivantes : - recevoir le message SIP invite en 201; - accuser-réception du message SIP INVITE par un message RP(100TRNG) de type « 100 Trying » ; - extraire en 202 les numéros de téléphone de l'appelant et de l'appelé du message reçu ; - rechercher le numéro de téléphone de l'appelant dans une table de données de réputation DB_SPM du réseau RC, comprenant des entrées associant au numéro de téléphone d'un appelant des informations de réputation, telles que par exemple un type d'appelant. Un type d'appelant comprend par exemple un type commercial et désigne les démarcheurs commerciaux, un type frauduleux (par exemple les appels de type « *spam »,* les démarcheurs étant désignés par le terme « *spammeur »)* et un type légitime. Cette table de réputation DB_SPM est mise à jour au fil de l'eau par l'opérateur, de façon connue en soi.

On notera que dans d'autres modes de réalisation, le serveur proxy PS ne met pas en œuvre l'opération de rechercher le numéro de téléphone de l'appelant dans une table de données de réputation DB_SPM du réseau RC. Cette opération est en effet optionnelle, car il peut être aussi pertinent de prendre en considération le fait que des appelants légitimes, par exemple des contacts de l'utilisateur précédent du numéro de téléphone suspendu, continuent à tenter de joindre cet utilisateur parce qu'ils n'ont pas été informés de son changement de numéro de téléphone.

Les informations relatives à la réputation de l'appelant peuvent être obtenues de différentes manières par l'opérateur du réseau de communications. Selon un premier exemple, ce dernier exploite des rapports émis par des utilisateurs qui ont déjà reçu des appels de cet appelant pour signaler que l'appelant est une société de télémarketing, par exemple. Selon un deuxième exemple, l'opérateur peut analyser des enregistrements d'appels pour identifier les appelants de type démarcheurs commerciaux ou frauduleux sur la base de modèles d'appels prédéterminés. Par exemple, un appelant démarcheur commercial passe généralement de nombreux appels à de nombreuses personnes différentes sur un court laps de temps. Un appelant frauduleux cherche à inciter l'appelé à rappeler un numéro de téléphone surtaxé en passant de nombreux appels courts et en raccrochant avant que l'appelé ne puisse répondre (« ping calls », en anglais) ; - si le numéro de téléphone de l'appelant est présent dans la table de données DB_SPM et après vérification en 22 que les éventuels critères de mise à jour de la table DB_UN sont satisfaits, requérir (RQ(UN1, AL)) l'information de niveau d'activité associée au numéro de téléphone UN1 dans la table de données des numéros de téléphone DB_UN, mettre à jour cette information et demander en 23 dans un message de requête RQ_UP(AL, UN1) le stockage de cette information AL mise à jour dans la table de données DB_UN pour le numéro de téléphone UN1. Cette mise jour comprend au moins l'incrémentation d'un compteur CNT des appels reçus vers le numéro UN1 pour la période d'observation courante) ; - répondre en 204 au réseau CLR_OP de l'appelant par un message d'erreur, par exemple un message SIP de type « 404 Failure » pour lui indiquer que la demande d'établissement d'appel est rejetée pour cause de numéro de téléphone non attribué.

A cet égard, on note que dans les anciens systèmes, par exemple SS7/ISUP, le message d'erreur est de type « Cause Code 1 ». Le système ISUP est utilisé pour l'établissement de connexions câblées entre centraux. Il comprend les messages associés à la connexion et à la déconnexion des appels. L'ISUP est le protocole utilisé pour prendre en charge la signalisation nécessaire à la fourniture de services vocaux et non vocaux dans les communications téléphoniques. Il s'agit d'une extension du SS7 (de l'anglais, « Signalling System No. 7 »), utilisé comme protocole d'interface pour la voix et les données au sein du réseau téléphonique public commuté PSTN ou RPC, ainsi que pour les entrées/sorties de ce réseau. Ce message d'erreur est transmis par le réseau CLR_OP de l'appelant au terminal de l'appelant UE-A. L'erreur est affichée à l'appelant et l'appel se termine par un message ACK pour accuser réception du message d'erreur.

Le serveur proxy PS ainsi met en œuvre le procédé de gestion d'au moins un numéro de téléphone non attribué dans le réseau de communications RC qui vient d'être décrit en relation avec les figures 2 et 3A. Avantageusement, ce procédé est implémenté sous la forme d'une application logicielle API_MG_UN.

En variante, le procédé de gestion qui vient d'être décrit est mis en œuvre au niveau d'un serveur d'application TAS qui, du fait qu'il est configuré pour surveiller le trafic et mettre à jour des bases de données, dispose des ressources pour le faire. Avantageusement, l'application logicielle API_MG_UN est chargée et exécutée par le serveur d'applications TAS.

A cet égard, on note que le message SIP INVITE est acheminé dans le réseau de communication RC de l'opérateur par l'intermédiaire de plusieurs équipements de communication tels que des équipements routeurs, des équipements contrôleurs de session et des serveurs d'application de téléphonie ou TAS (pour « Telephony Application Server », en anglais). En particulier, un tel serveur d'application est configuré pour retransmettre les messages SIP INVITE qu'il reçoit, vers des équipements de communication ou des applications logicielles configurés pour rendre des services dédiés en lien avec le traitement d'une communication téléphonique. Ces équipements de communication et applications logicielles se sont préalablement enregistrés auprès du serveur d'application TAS. Il s'agit par exemple de services de facturation ou de proxy. Un serveur proxy tel que le serveur PS est un serveur qui sert d'intermédiaire et dont le principal objectif est de cacher les détails du réseau aux connexions externes afin de préserver sa sécurité. Le proxy transmet les demandes aux zones sensibles du réseau sans partager aucun détail de ce réseau, comme l'adresse IP. Les applications logicielles en question peuvent être hébergées par le serveur d'application lui-même ou par un équipement de communication distinct tel que le serveur PS.

On décrit désormais en relation avec la figure 5 un procédé de traitement d'une demande d'attribution d'un numéro de téléphone non attribué à un utilisateur du réseau de communications RC selon un mode de réalisation de l'invention. Dans cet exemple, le procédé est mis en œuvre par un équipement EQ2 du réseau de communications RC, par exemple la plateforme de gestion de clientèle CRM_PF de la figure 1. Par exemple, le procédé de traitement en question est implémenté sous la forme d'une application logicielle dédiée API_ATT_UN, qui a été préalablement chargée dans l'équipement EQ2, CRM_PF.

En 50, une requête d'attribution REQ_ATT_UN d'un numéro de téléphone à un utilisateur du réseau de communication RC est reçue par la plateforme CRM_PF d'un agent de service CSA.

En 51, un numéro de téléphone est sélectionné parmi une pluralité de numéros de téléphone réservés à l'opérateur du réseau de communications RC et actuellement non attribués de la façon suivante : - en 511, un numéro de téléphone non attribué UN1 est obtenu par interrogation de la table de données de numéros de téléphone non attribués DB_UN, stockée dans une mémoire du réseau de communication RC de l'opérateur. Selon l'invention et conformément à ce qui a été précédemment décrit en relation avec les figures 2, 3A-3B et 4, cette table DB_UN associe au numéro de téléphone UN1 une information relative à un niveau d'activité du numéro de téléphone UN1 dans le réseau RC pendant une période d'observation donnée, par exemple égale à 30 jours. Avantageusement, il est précisé dans la requête RQ(UN1) que le numéro de téléphone requis ne doit plus être attribué depuis au moins une durée de suspension donnée, par exemple égale à six mois. En alternative, la table de données gère cet aspect de son côté et ne propose que des numéros de téléphone non attribués qui satisfont ce critère.

L'observation d'une telle période de suspension pendant laquelle un numéro de téléphone non attribué ne peut pas être réattribué, a deux objectifs : d'abord, permettre aux utilisateurs qui avaient enregistré ce numéro de téléphone dans leurs contacts, de se rendre compte que ce numéro n'est plus valable, c'est-à-dire qu'il n'est plus associé à l'utilisateur indiqué dans leurs contacts. Si le numéro de téléphone était immédiatement réattribué, le nouvel utilisateur de ce numéro de téléphone recevrait beaucoup d'appels destinés à l'utilisateur précédent. Cette période varie d'un opérateur à l'autre, mais elle est généralement d'au moins 90 jours.

La réponse de la table comprend donc un numéro de téléphone non attribué UN1 et au moins la valeur d'une information AL relative à un niveau d'activité de ce numéro de téléphone UN1 pour la période d'observation courante ; - en 512, l'information AL est extraite de la réponse et évaluée à l'aide de critères de sélection CSL. Selon un premier mode de réalisation de l'invention, l'information AL extraite comprend un compteur d'un nombre de demandes d'établissement d'appel vers ce numéro de téléphone reçues pendant la période d'observation. La valeur de compteur est comparée à un seuil d'acceptabilité TH, TH_SPM donné. Par exemple, l'information de comptage CNT reçue concerne indifféremment toutes les tentatives d'appel reçues et le seuil d'acceptabilité TH est fixé entre 20 et 30 pour une période de 30 jours. Avantageusement, la réponse reçue comprend une autre information de comptage CNT_SPM relative aux tentatives d'appel émanant de démarcheurs commerciaux ou illégitimes et le seuil d'acceptabilité TH_SPM est fixé à 4 tentatives d'appels dans la période d'observation. Si le ou compteurs sont inférieurs ou égaux à leurs seuils respectifs, le numéro de téléphone UN1 est considéré comme prêt à être réutilisé et il est donc sélectionné et le procédé passe à l'étape 53. Selon un deuxième mode de réalisation, l'information AL extraite comprend un indicateur IA d'activité du numéro de téléphone positionné à la valeur « actif » ou « inactif ». Avantageusement, le critère de sélection CSL est de sélectionner un numéro de téléphone dont l'indicateur IA a la valeur « inactif ». Si c'est le cas, le numéro de téléphone UN1 est sélectionné et le procédé passe à l'étape 52. Sinon, les critères de sélection CSL n'étant pas satisfaits, le numéro de téléphone UN1 n'est pas retenu et le procédé répète l'étape 511 afin d'obtenir un autre numéro de téléphone UN2 candidat à la réattribution.

On suppose que le numéro de téléphone UN1 a été sélectionné. En 52, une requête de suppression de l'enregistrement correspondant au numéro de téléphone UN1 est envoyée à la table de données DB_UN. En 53, un message de réponse est envoyé à l'agent de service requérant, comprenant le numéro de téléphone UN1.

On note qu'il y a plusieurs façons d'accéder à la base de données. Une première option est d'y accéder indirectement par l'intermédiaire du serveur d'applications TAS ou de tout autre équipement de réseau impliqué dans le routage des appels et configuré pour interroger la base de données DB_UN. Cette interrogation se fait par exemple par le biais d'une application logicielle dédiée ou via une connexion directe à la base de données et d'un langage d'interrogation tel que SQL, par exemple. Dans le premier cas, le TAS met à jour le nombre de tentatives d'appel vers un numéro de téléphone, ces tentatives pouvant émaner de « spammeurs ».

Une deuxième option est que la plateforme de gestion de clientèle CRM_PF accède directement à la base de données DB_UN par le biais d'une application logicielle ou API sécurisée conçue pour requérir des informations sur un numéro de téléphone auprès de la base de données DB_UN et vérifier qu'il peut être réattribué à partir des informations obtenues. La connexion entre la plateforme CRM_PF et la base de données DB_UN peut se faire par internet.

Une troisième option est que la plateforme de gestion de clientèle CRM_PF accède à l'intégralité des données de la base de données DB_UN sous la forme d'un fichier, par exemple un fichier de type tableur, au format CSV (de l'anglais, « Comma-Separated Values »), dans lequel les données sont séparées par des virgules. Le fichier en question est par exemple exporté par le serveur d'application TAS ou tout autre équipement serveur du réseau configuré pour accéder à la base de données DB_UN, puis partagée avec la plateforme de gestion CRM_PF via une connexion sécurisée, telle qu'une connexion établie selon le protocole SFTP (pour SSH File Transfer Protocol), pour qu'elle l'importe dans son système logiciel. Ce fichier peut ensuite être importé dans d'autres systèmes logiciels. Ces fichiers CSV sont généralement partagés via des connexions sécurisées, telles que des connexions de type SFTP (protocole de transfert de fichiers sécurisé).

On détaille maintenant, en relation avec la figure 6, un diagramme de flux des messages échangés entre différents équipements du réseau, suite à la réception d'une demande d'attribution d'un numéro de téléphone non attribué à un utilisateur selon un exemple de réalisation de l'invention. Dans cet exemple, on suppose qu'un agent de clientèle CSA se connecte à la plateforme CRM_PF pour requérir une nouvelle carte SIM pour un nouvel utilisateur du réseau de communication RC. A réception de la requête RQ_ATT(UN) émise par l'agent CSA, la plateforme CRM_PF demande un numéro de téléphone non attribué à la table de données DB_UN pour cette nouvelle carte SIM.

Avantageusement, la plateforme CRM_PF précise dans sa requête RQ(UN1) qu'elle souhaite obtenir un numéro qui n'est plus attribué depuis au moins une durée de suspension donnée, par exemple égale à six mois. En alternative, la table de données gère cet aspect de son côté et ne propose que des numéros de téléphone non attribués qui satisfont ce critère.

En réponse, la plateforme CRM_PF obtient en 511 le numéro de téléphone UN1 et au moins une information AL relative à un niveau d'activité du numéro de téléphone UN1 pendant une période d'observation courante, par exemple égale aux 30 jours précédents. Comme précédemment décrit, il s'agit par exemple d'une ou plusieurs valeurs de compteur CNT, CNT_SPM d'un nombre d'appels reçus vers ce numéro de téléphone pendant la période d'observation ou la valeur d'un indicateur d'activité IA. En 512, elle vérifie à l'aide de l'information AL obtenue que le numéro de téléphone UN1 satisfait les critères de sélection CSL prédéfinie. Par exemple, elle compare respectivement la ou les valeurs de compteurs obtenues à un ou des seuils TH, TH_SPM donnés et décide de sélectionner le numéro de téléphone UN1 si aucun des seuils n'est franchi. En alternative, elle vérifie que l'indicateur d'activité IA a la valeur « inactif ». Elle décide en conséquence de sélectionner ou de ne pas sélectionner le numéro de téléphone UN1.

Si le numéro de téléphone est sélectionné, elle répond en 53 à l'agent CSA en lui indiquant le numéro de téléphone UN1 est attribué à l'utilisateur et en lui fournissant également les détails de la nouvelle SIM. En 52, la plateforme CRM demande à la table de données DB_UN de supprimer l'entrée associée au numéro de téléphone UN1 qui est maintenant réattribué. Elle met aussi à jour le serveur HSS/HLR pour en lui communiquant les détails de la nouvelle SIM et du numéro de téléphoneUN1 à associer à cette SIM.

Sinon, les opérations 511 et 512 sont répétées tant qu'un numéro de téléphone n'a pas pu être sélectionné.

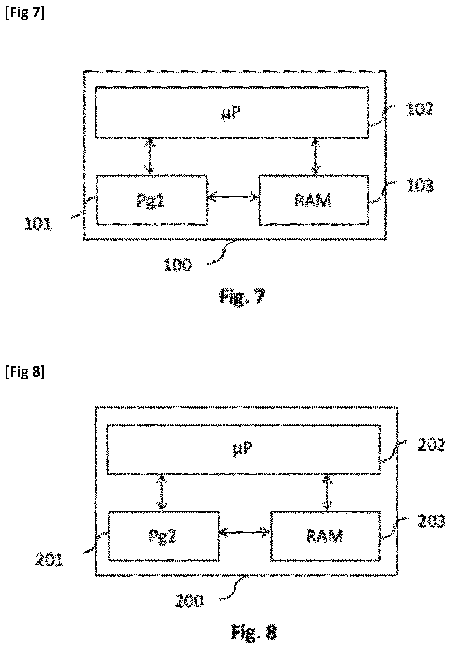

On présente maintenant, en relation avec la figure 7, un exemple de structure matérielle d'un dispositif 100 de gestion d'au moins un numéro de téléphone non attribué à un utilisateur dans un réseau de communication local selon l'invention, ledit numéro de téléphone étant précédemment attribué à un utilisateur du réseau de communications jusqu'à une date donnée, dite date de suspension, ledit dispositif comprenant au moins un module d'obtention d'une information relative à au moins une demande d'établissement d'appel reçue par ledit réseau de communications vers ledit numéro de téléphone pendant une période temporelle donnée, dite période d'observation, postérieure à ladite date de suspension, un module de mise à jour d'au moins une information relative à un niveau d'activité du numéro de téléphone dans le réseau pour la période d'observation donnée à partir de ladite information obtenue et un module de stockage, dans une première table de données, dite table des numéros de téléphone non attribués, de ladite information relative à un niveau d'activité du numéro de téléphone en association avec ledit numéro de téléphone et une information relative à ladite période d'observation donnée. Cette information AL comprend au moins un compteur d'un nombre de demandes d'établissement d'appel vers ledit numéro de téléphone reçus par le réseau de communications pour la période d'observation donnée et la mise à jour comprend au moins l'incrémentation dudit compteur.

Avantageusement, le dispositif 100 comprend en outre un module de réception d'une demande d'établissement d'appel vers le numéro de téléphone non attribué et un module de réponse à ladite demande.

Selon un autre mode de réalisation de l'invention, le dispositif 100 comprend un module d'interrogation d'une deuxième table de données, dite table de données d'événements, stockée dans une mémoire dudit réseau, ladite deuxième table comprenant des enregistrements associant à un numéro de téléphone des messages d'erreurs émis en réponse à des demandes d'établissement d'un appel vers ledit numéro de téléphone.

Avantageusement le dispositif 100 comprend aussi un module d'obtention d'une information d'appartenance de l'appelant à une classe de réputation d'au moins une troisième table de données, dite table de réputation comprenant des entrées associant au numéro de téléphone d'un appelant des informations de réputation, telles que par exemple un type d'appelant et un module de vérification configuré pour vérifier un critère relatif au type d'appelant.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules d'obtention, mise à jour et stockage, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir une copie des informations de valeur de l'information de niveau d'activité, de type d'appelant, de période de suspension, etc, obtenues par exemple de la table de données de numéros de téléphone non attribués DB_UN, de la table de données d'événements DB_LG. Elle peut aussi comprendre les critères de mise à jour CMJ de l'information relative à un niveau d'activité du numéro de téléphone.

La figure 7 illustre seulement une manière particulière, parmi plusieurs possibles, de réaliser le dispositif 100 afin qu'il effectue les étapes du procédé de gestion d'au moins un numéro de téléphone non attribué à un utilisateur dans un réseau de communication tel que détaillé ci-dessus, en relation avec les figures 2, 3A et 3B dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement de communication EQ1, tel qu'un serveur proxy PS ou un serveur d'application de téléphonie TAS, mais il peut aussi être indépendant de cet équipement et connecté à lui par une interface de type filaire ou sans fil.

On présente aussi, en relation avec la figure 8, un exemple de structure matérielle d'un dispositif 200 de traitement d'une demande d'attribution d'un numéro de téléphone à un utilisateur d'un réseau de communication selon l'invention, comprenant au moins un module de réception de ladite demande d'attribution, un module de sélection dudit numéro de téléphone parmi une pluralité de numéros de téléphone non attribués et un module d'envoi d'une réponse comprenant le numéro de téléphone sélectionné, ledit module de sélection étant configuré pour :
- obtenir d'au moins un numéro de téléphone non attribué et d'au moins une information associée audit numéro, ladite information étant relative à un niveau d'activité AL du numéro de téléphone pendant une période temporelle donnée, dite période d'observation, auprès d'une première table de données, dite table des numéros de téléphone non attribués;
- décider d'attribuer ledit numéro de téléphone audit utilisateur, en fonction de ladite information et d'au moins un critère de décision, et
- répéter les opérations précédentes avec un autre numéro de téléphone, lorsqu'il a été décidé de ne pas sélectionner le numéro de téléphone.

Avantageusement, le dispositif 200 comprend un module d'émission d'une requête de suppression de l'entrée associée audit numéro de téléphone non attribué dans la table de numéros de téléphone non attribués.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules de réception, de sélection et d'émission d'une réponse, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir les informations obtenues auprès de la table de données de numéro de téléphone non attribués, les critères de sélection d'un numéro de téléphone, etc.

La figure 8 illustre seulement une manière particulière, parmi plusieurs possibles, de réaliser le dispositif 200 afin qu'il effectue les étapes du procédé de traitement d'une demande d'attribution d'un numéro de téléphone tel que détaillé ci-dessus, en relation avec les figures 5 et 6 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 200 intégré dans un équipement de communication EQ2, tel qu'une plateforme de gestion de clientèle CRM_PF mais il peut aussi être indépendant de cet équipement et connecté à lui par une interface de type filaire ou sans fil.

L'invention qui vient d'être décrite dans ses différents modes de réalisation présente de nombreux avantages. En effet, en enrichissant une table de données de l'opérateur comprenant des numéros de téléphone réservés à l'opérateur mais actuellement non attribués à des utilisateurs, à l'aide d'informations relatives à un niveau résiduel d'activité d'un numéro de téléphone précédemment attribué à un utilisateur dans le réseau de communication, elle permet à l'opérateur de décider de façon plus efficace et plus sûre, en fonction de ce niveau d'activité, si le numéro de téléphone en question est prêt ou non à être réattribué à un nouvel utilisateur. Cette décision est prise à l'issue d'une période de suspension incompressible qui peut de ce fait être réduite, par exemple de 6 à 3 mois. De la sorte, le numéro de téléphone peut être remis en service dès qu'il a pu être établi qu'il ne causerait pas de nuisances à son futur utilisateur dues à des appels destinés à l'utilisateur précédent de ce numéro de téléphone.

## Revendications

1. Procédé de gestion d'au moins un numéro de téléphone non attribué dans un réseau de communications (RC), **caractérisé en ce que** ledit procédé est mis en œuvre par un équipement du réseau (EQ1) et comprend:
- la mise à jour (23) dans une première table de données (DB_UN) stockant des numéros de téléphone non attribués, d'au moins une information relative à un niveau d'activité (AL) dudit numéro de téléphone dans le réseau de communication, ladite information relative à un niveau d'activité étant représentative d'un nombre de demandes d'établissement d'appel vers ledit numéro de téléphone reçus par le réseau de communications pour une période d'observation et étant associée avec ledit numéro de téléphone.

2. Procédé de gestion selon la revendication 1, **caractérisé en ce que** l'information relative à un niveau d'activité comprenant un compteur d'un nombre de tentatives d'appel vers ledit numéro de téléphone pendant la période d'observation, la mise à jour comprend l'incrémentation du compteur à l'aide d'une information relative à une demande d'établissement d'appel reçue par le réseau de communication vers ledit numéro de téléphone pendant la période d'observation.

3. Procédé de gestion selon la revendication 1, **caractérisé en ce que** ladite information relative à ladite demande d'établissement d'appel est obtenue par interrogation, à partir dudit numéro de téléphone appelé, d'une deuxième table de données (DB_LG), dite table d'événements, ladite deuxième table comprenant des entrées associant à un numéro de téléphone des messages d'erreurs émis en réponse à des demandes d'établissement d'un appel vers ledit numéro de téléphone.

4. Procédé de gestion selon l'une quelconque des revendications précédentes, **caractérisé en ce que** ledit procédé comprend :
- l'obtention (203) d'une information d'appartenance de l'appelant à au moins une classe de réputation donnée, auprès d'au moins une troisième table de données (DB_SPM), dite table de réputation ; et
- la mise à jour de la table de données (DB_UN) de numéros de téléphone non attribués est en outre fonction de l'appartenance de l'appelant à la au moins une classe de réputation donnée.

5. Procédé de traitement d'une demande d'attribution d'un numéro de téléphone (UN1) à un utilisateur d'un réseau de communications (RC), ledit procédé comprenant, sur réception (50) de ladite demande d'attribution (RQ_ATT_UN),
la sélection (51), dans une première table de données (DB_UN) stockant des numéros de téléphone non attribués, dudit numéro de téléphone parmi une pluralité de numéros de téléphone non attribués, en fonction d'une information (AL) relative à un niveau d'activité et d'au moins un critère de sélection (CRT), ladite information relative à un niveau d'activité étant représentative d'un nombre de demandes d'établissement d'appel vers ledit numéro de téléphone reçus par le réseau de communications pour une période d'observation et étant associée avec ledit numéro de téléphone, et
l'envoi (53) d'une réponse (RP_ATT_UN1) comprenant le numéro de téléphone sélectionné.

6. Procédé de traitement d'une demande d'attribution d'un numéro de téléphone à un utilisateur d'un réseau de communications selon la revendication précédente, **caractérisé en ce que** l'information relative à un niveau d'activité dudit numéro de téléphone dans le réseau de communications comprend au moins une information relative à un compteur (CNT, CNT_SPM) d'un nombre de demandes d'établissement d'appel vers ledit numéro reçues par ledit réseau de communications pendant la période d'observation donnée, et **en ce que** le procédé comprend la vérification dudit au moins un critère de sélection (CSL), ladite vérification comprenant la comparaison de ladite information à un seuil de décision donné, une décision de sélectionner ledit numéro de téléphone étant prise lorsque la valeur de compteur est inférieure ou égale à un seuil d'acceptabilité donné (TH, TH_SPM).

7. Procédé de traitement d'une demande d'attribution d'un numéro de téléphone selon l'une quelconque des revendications 5 et 6, **caractérisé en ce que** l'information relative à un niveau d'activité dudit numéro de téléphone comprend un indicateur d'activité destiné à prendre une valeur parmi les valeurs « actif » et « inactif » et **en ce que** ledit au moins un critère de sélection comprend que l'indicateur d'activité a la valeur « inactif ».

8. Procédé de traitement d'une demande d'attribution d'un numéro de téléphone selon la revendication précédente, **caractérisé en ce qu'**il comprend l'émission d'une requête d'obtention (RQ(UN1,AL)) d'un numéro de téléphone non attribué à ladite table de données (DB_UN), ladite requête comprenant ledit critère de sélection.

9. Dispositif (100) de gestion d'au moins un numéro de téléphone non attribué dans un réseau de communications (RC), **caractérisé en ce que** ledit dispositif est configuré pour mettre en œuvre au niveau d'un équipement du réseau (EQ1) :
- la mise à jour, dans une première table de données (DB_UN) stockant des numéros de téléphone non attribués, d'au moins une information relative à un niveau d'activité (AL) dudit numéro de téléphone dans le réseau de communication, ladite information relative à un niveau d'activité étant représentative d'un nombre de demandes d'établissement d'appel vers ledit numéro de téléphone reçus par le réseau de communications pour une période d'observation et étant associée avec ledit numéro de téléphone.

10. Dispositif (200) de traitement d'une demande d'attribution d'un numéro de téléphone à un utilisateur d'un réseau de télécommunications, ledit dispositif étant configuré pour mettre en œuvre, sur réception de ladite demande d'attribution :
- la sélection, dans une première table de données (DB_UN) stockant des numéros de téléphone non attribués, dudit numéro de téléphone parmi une pluralité de numéros de téléphone non attribués, en fonction d'une information (AL) relative à un niveau d'activité et d'au moins un critère de sélection (CRT), ladite information relative à un niveau d'activité étant représentative d'un nombre de demandes d'établissement d'appel vers ledit numéro de téléphone reçus par le réseau de communications pour une période d'observation et étant associée avec ledit numéro de téléphone, et
- l'envoi d'une réponse (RP_ATT_UN1) comprenant le numéro de téléphone sélectionné.

11. Support d'enregistrement d'une table de données (DB_UN), dite table de numéros de téléphone non attribués d'un réseau de télécommunications, ladite table comprenant des entrées, **caractérisée en ce qu'**une dite entrée associe à un numéro de téléphone non attribué au moins une information relative à un niveau d'activité dudit numéro de téléphone dans ledit réseau de communication pendant une période temporelle donnée, dite période d'observation.

12. Equipement de communication (EQ1, PS, TAS) dans un réseau de télécommunications, **caractérisé en ce que** ledit équipement de communication comprend un dispositif (100) de gestion d'au moins un numéro de téléphone non attribué à un utilisateur dudit réseau selon la revendication 9.

13. Equipement de communication (EQ2, CRM_PF, TAS) dans un réseau de communications, **caractérisé en ce qu'**il comprend un dispositif (200) de traitement d'une demande d'attribution d'un numéro de téléphone à un utilisateur dudit réseau selon la revendication 10.

14. Système (10) de gestion d'un numéro de téléphone à un utilisateur dans un réseau de communication (RC), **caractérisé en ce qu'**il comprend un dispositif (200) de traitement d'une demande d'attribution d'un numéro de téléphone à un utilisateur dudit réseau selon la revendication 10, un dispositif (100) de gestion d'au moins un numéro de téléphone non attribué à un utilisateur dudit réseau selon la revendication 9 et un support d'enregistrement d'une table de données (DB_UN) des numéros de téléphone non attribués selon la revendication 11.

15. Programme d'ordinateur (Pg1, Pg2) comprenant des instructions de code de programme pour la mise en œuvre d'un procédé selon l'une quelconque des revendications 1 à 8, lorsqu'il est exécuté par un processeur.
